# EUROPEAN PATENT APPLICATION

(11) **EP 4 415 473 A1**
(43) Date of publication of application: **14.08.2024**
(21) Application number: 23156167.1
(22) Date of filing: 10.02.2023
(51) Int. Cl.: H04W 76/28

(54) **CONNECTED MODE DISCONTINUOUS RECEPTION OPERATION**

(71) Applicant: Vodafone Group Services Limited, Newbury RG14 2FN (GB)
(72) Inventor: WORRALL, Chandrika, London, W2 6BY (GB); KULAKOV, Alexey, London, W2 6BY (GB); PUDNEY, Chris, London, W2 6BY (GB)
(74) Representative: Boult Wade Tennant LLP

(57) **Abstract**

Connected Mode Discontinuous Reception (C-DRX) operation is provided in respect of a User Equipment (UE) in a cellular network for handling first traffic having a first periodicity and second traffic having a second, longer periodicity. A single C-DRX configuration is operated between the network and UE, the single C-DRX configuration having timing parameters defining a repeating sequence of communication windows, at least one of the timing parameters varying between successive communication windows of the repeating sequence based on both the first and second periodicities.

## Description

### Technical Field of the Disclosure

The disclosure concerns Connected Mode Discontinuous Reception (C-DRX) operation in respect of a User Equipment (UE) in a cellular network, especially when handling delay-sensitive services.

### Background to the Disclosure

Traffic handling systems within cellular networks are typically designed to map traffic for a specific service (for example, real time services, for instance voice call services or video services or a web browsing service, etc.) to a certain Quality of Service (QoS) characteristic, which the cellular network is then configured to satisfy in order to provide a desired user experience. Complexities arise when providing multiple services.

In 4G Long Term Evolution (LTE) and 5G network architectures, satisfying the QoS characteristics for each service in the downlink is achieved at the network by a series of steps. Traffic packets of a specific service are sent from the User Plane Function (UPF) or Packet Gateway (P-GW) to the radio access node (gNB/eNB) over GTP-U (GPRS Tunnelling Protocol - User data) tunnels, where they are treated according to pre-defined QoS flows, each mapped to a respective so-called Data Radio Bearer (DRB). The configuration (features and settings) of the DRBs is chosen to fulfil the QoS parameters. To satisfy QoS requirements over the air interface, different QoS flows are generally mapped to separate DRBs. The access node enables radio-related features and scheduling of the packets differently for each DRB. Every time a service is setup, corresponding configurations will be provided to the radio access nodes. The traffic is subsequently handled according to these configurations.

The characteristics of different QoS flows (termed SOls in 5GS, and OCls in EPS) are standardized in 3GPP Technical Specification (TS) 23.501 in Table 5.7.4-1: Standardized 5QI to QoS characteristics mapping and similarly in Table 6.1.7-A in TS 23.203, rel. 17.0.0. The main attributes of a particular QoS flow (5QI) are: Resource type; Guaranteed Bit rate (GBR) or Non-Guaranteed Bit rate; Priority; Packet Delay Budget; Packet Error Rate; and Parameters that indicate burstiness of the data (max data burst volume and averaging window).

The UE can support different services with different QoS requirements. Handling multiple services being provided simultaneously presents challenges. In particular, certain settings at the lower layers of the protocol stack at the UE are independent of the services being provided. One such setting is Discontinuous Reception in Connected mode (C-DRX). This setting, once configured, allows the UE to listen to the network radio access node (gNB/eNB) only at predefined times for a predefined duration. If no traffic arrives during the predefined duration, the UE goes into a sleep mode until the next predefined time arrives. C-DRX is configured individually to a UE, but is not set specifically for each or traffic flow and does not vary between DRBs or traffic flows.

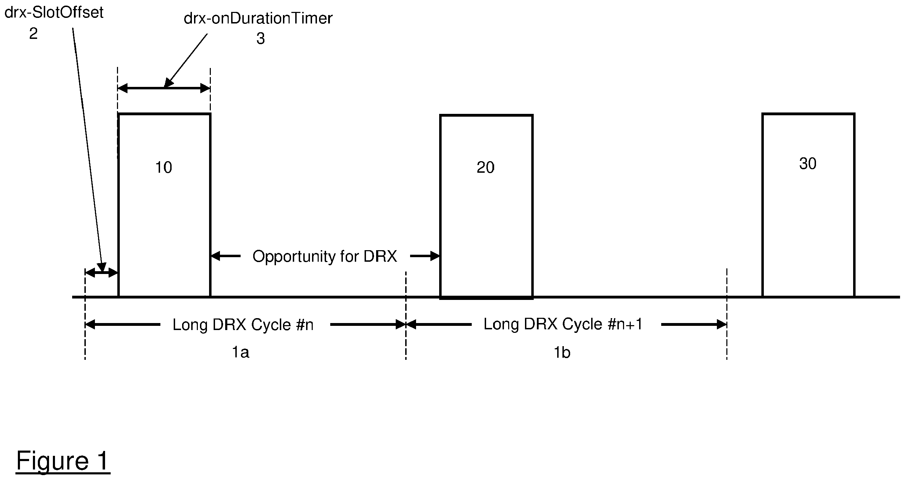

Referring to Figure 1, there is shown a schematic illustration of the timing of existing DRX operation for a single traffic or service. The horizontal axis indicates increasing time and is divided into intervals, each of the same length. These are illustrated by first cycle interval 1a (Long DRX Cycle #n) and second cycle interval 1b. A first time-window 10 during which the UE is listening to the network radio access node (that is, the UE receiver is on) begins at a time separated from the start of the first cycle interval 1a by an offset amount 2 (drx-Slot Offset). The duration 3 of the first time-window 10 is defined by drx-onDurationTimer. Together, these timing parameters define the C-DRX operation. Settings and parameters of existing C-DRX configuration can be found in 3GPP TS 38.331, rel. 17.3.0 and the formula to calculate the start of drx-onDurationTimer can be found in 3GPP TS 38.321, rel. 17.3.0, section 5.7.

The same timings apply to the second cycle interval 1b (Long DRX Cycle #n+1), with the UE listening to the network radio access node during the second time-window 20. Similarly, the UE listens to the network radio access node during the third time-window 30 in the subsequent cycle interval, with the same timings being applied. Outside the specified time windows, the UE is in sleep mode to save power. For example, if drx-Slot Offset=0, Long DRX Cycle=20ms and DRX-OnDurationTimer=2ms, the UE will wake up every 20ms for 2ms to receive data. The network should have data ready for transmission to the UE during each time window (that is, every 20ms for this example). If the data arrives later than the time window (for instance, at the time of 3ms from the start of the cycle), the network would need to buffer the data until the next time window begins and the UE is awake again to receive the data (an additional 17ms in this example).

It will be thus understood that C-DRX may work efficiently for periodic traffic for a single service. Indeed, the cycle interval length is preferably set to match the periodicity of the data (the interval between arrival times of data packets for the traffic) and the offset amount and/or on duration can also be set to match the arrival time of the traffic at the base station. It should be noted that, where traffic is not periodic in nature, the performance of C-DRX may be lower, but there may still be power saving benefits in such cases.

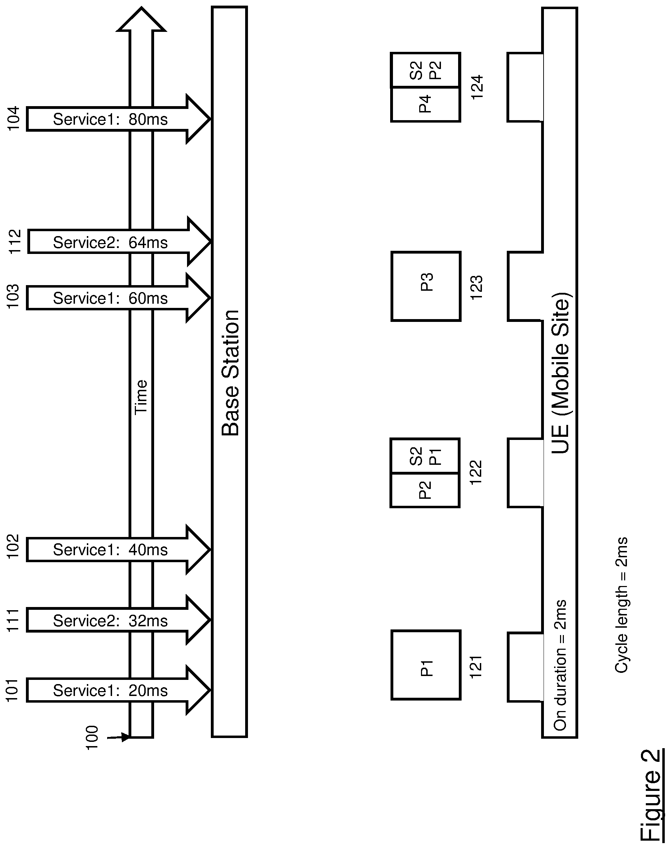

A specific issue may arise when the UE receives traffic for two services with different periodicities. Referring next to Figure 2, there is schematically shown timing of packets for two services having different periodicity arriving at a base station and transmission from the base station to a UE under existing C-DRX operation. In line with the above example, the UE is configured for C-DRX operation with Long DRX Cycle=20ms and DRX-OnDurationTimer=2ms. In other words, the time windows during which the UE is listening to the network radio access node (base station) occur every 20ms and each last for 2ms. The traffic for a first service (Service 1) has a periodicity of 20ms. However, the second service (Service 2) has a longer periodicity, specifically 32ms in this example. Under existing approaches, the C-DRX timing parameters are set in line with the shorter periodicity traffic pattern. Thus, the cycle interval length is set at the periodicity of the first service, that is 20ms.

However, this results in delays in transmission of packets for the second service, as will be discussed with reference to Figure 2. The zero time (t=0) 100 is indicated and a first packet for Service 1 101 (P1) arrives 20ms later (t=20ms). This coincides with a first time-window for UE reception, so P1 is transmitted in a first transmission 121 during the first time-window. Subsequently (t=32ms), a first packet for Service 2 111 (S2 P1) arrives. Since the UE is in a sleep mode at this time, the S2 P1 packet is buffered at the base station. A second packet for Service 1 102 (P2) arrives at the base station at t=40ms, which coincides with a second time-window for UE reception. Thus, S2 P1 and P2 are both transmitted in a second transmission 122 during the second time-window. There is therefore an 8ms delay in the transmission of S2 P1. A third packet for Service 1 103 (P3) arrives at the base station at t=60ms, which coincides with a third time-window for UE reception. Hence, P3 is transmitted in a third transmission 123 during the third time-window. Subsequently (t=64ms), a second packet for Service 2 111 (S2 P2) arrives. Since the UE is in a sleep mode at this time, the S2 P2 packet is buffered at the base station. A fourth packet for Service 1 104 (P4) arrives at the base station at t=80ms, which coincides with a fourth time-window for UE reception. Thus, S2 P2 and P4 are both transmitted in a fourth transmission 124 during the fourth time-window. There is therefore an 16ms delay in the transmission of S2 P2. This is a significant delay.

Thus, existing C-DRX operation with multiple services of different periodicity leads to buffering of data for the service with longer periodicity. Such buffering might be acceptable to the user where the second service is delay tolerant, for example background traffic or general web browsing. This approach enables simple implementation by providing a single C-DRX configuration to the UE.

3GPP is considering approaches for handling Extended Reality (XR) traffic, which may comprise multiple services with different traffic parameters. One limitation with existing C-DRX implementations is that the UE can only wake up at a time defined by an integer number of milliseconds, but the periodicity of XR traffic may be a non-integer number of milliseconds, for example where it depends on the frame rates used by the application codec. For instance, a 60 frame per second video would be equivalent a 16.667ms traffic periodicity. This has been addressed with a number of proposals in 3GPP working documents: R2-2211180, R2-2211775, R2-2212886 and R2-2212812.

Some of these documents also consider the issue of traffic with different characteristics, for example different periodicities. In particular, XR traffic may comprise a video service with a shorter periodicity (for instance, around 16ms) and a voice service with a longer periodicity (for instance, around 20ms). Neither of these services is delay tolerant. The known technique of using single C-DRX configuration with timing parameters corresponding to the tightest QoS requirement of the multiple services introduces buffering delay. 3GPP working document R2-2211775 analyses existing approaches for handling such traffic with C-DRX:
"It has been proposed to allow multiple active DRX configurations simultaneously for different flows with different traffic characteristics. Simultaneous services with different QoS have been supported since LTE Rel-8. The assumption has been that the NW can configure the DRX configurations based on tightest requirement, thus only one active DRX configuration at a time is enough. Having multiple active configurations would lead to separate active time which is less efficient than scheduling bundled data. Besides, multiple active configurations make DRX operations more complex and may result in higher configuration complexity to operate it."

Thus, this document seems to indicate that the existing approach is the best available. However, this would appear to mean certain types of XR traffic cannot be delivered when C-DRX is operational without significant degradation. It would be desirable to allow C-DRX operation whilst being able to deliver multiple services having delay-sensitive traffic without QoS degradation.

### Summary of the Disclosure

Against this background, the present disclosure provides a method for Connected Mode Discontinuous Reception (C-DRX) operation in respect of a User Equipment (UE) in a cellular network according to claim 1, a computer program in line with claim 13, a network entity (or node) of a cellular network in accordance with claim 14 and a UE of a cellular network as defined by claim 15. Other preferred features are disclosed with reference to the claims and in the description below.

It has been recognised that, a single C-DRX configuration can be used for two types of traffic, each with a different periodicity. The single C-DRX configuration defines a repeating sequence of communication windows (DRX on durations), but whereas existing DRX sequences are the same for each cycle, the DRX timing parameters (particularly a cycle length time duration and/or an on duration) according to the disclosure vary between cycles. The variation depends on the periodicities of both types of traffic. Thus, the DRX timing parameters instead repeat over a longer time frame comprising multiple DRX cycles (that is, the single C-DRX configuration has multiple associated periods or is defined by a single period that is modulated).

Advantageously, a single C-DRX configuration requires significantly less processing power and overhead than multiple DRX configurations that are simultaneously active (which the UE implements using individual logic flows). A single C-DRX configuration can therefore provide the power-efficiency benefits of DRX without the QoS degradation associated with existing DRX techniques for handling multiple types of traffic with different periodicities. Both types of traffic are beneficially delay-sensitive and/or real time traffic. The cycle length time can be an integer or a non-integer. It will be understood that techniques according to the disclosure may be extended to cover more than two types of traffic. Approaches according to the disclosure may be implemented as software (computer program), in a controller, at a network entity (for example, a radio access node) or in a UE.

In some implementations, the single C-DRX configuration can be made up by taking the union (or superposition) of two periodic DRX configurations, in particular the union of a DRX configuration having a cycle length equal to the periodicity of the first traffic with a DRX configuration having a cycle length equal to the periodicity of the second traffic. The on duration of the DRX configuration having a cycle length equal to the periodicity of the first traffic beneficially remains constant and/or the on duration of the DRX configuration having a cycle length equal to the periodicity of the second traffic beneficially remains constant. Typically, the on duration for both DRX configurations is the same. Alternatively, the on duration of the DRX configuration having a cycle length equal to the periodicity of the first traffic and/or the on duration of the DRX configuration having a cycle length equal to the periodicity of the second traffic may vary between successive communication windows.

In other embodiments, the cycle length time of the single C-DRX configuration is fixed (for instance, equal to the shortest of the traffic periodicities) and the on duration is varied between successive communication windows. In particular, the on duration can be increased such that the end of each communication window matches the periodicity of the traffic with the longer (or longest) periodicity.

Instructions for the single C-DRX configuration are advantageously communicated from the network to the UE (communicating in this context meaning transmitting and/or receiving). This may be done using a Radio Resource Control (RRC) configuration message or Medium Access Control (MAC) signalling. In one option, the instructions comprise indications of the first and second periodicities (for example in the form of timing parameters of a periodic DRX configuration corresponding with the traffic characteristics). Then, the UE would determine timings of single C-DRX configuration. In another option, the instructions comprise the timing parameters that entirely define the single C-DRX configuration (for example, multiple sequential on durations and/or multiple sequential cycle lengths).

### Brief Description of the Drawings

The approach of the disclosure may be put into practice in various ways, one of which will now be described by way of example only and with reference to the accompanying drawings in which:
Figure 1 shows a schematic illustration of the timing of existing DRX operation for a single traffic;
Figure 2 schematically shows timing of packets for two services having different periodicity arriving at a base station and transmission from the base station to a UE under existing C-DRX operation;
Figure 3 schematically depicts timing of packets for two services having different periodicity arriving at a base station and transmission from the base station to a UE under a first C-DRX operation according to the disclosure;
Figure 4a schematically depicts timing of packets for a first of two services having a first periodicity arriving at a base station and transmission from the base station to a UE under an existing C-DRX operation;
Figure 4b schematically depicts timing of packets for a second of two services having a second, different periodicity arriving at a base station and transmission from the base station to a UE under an existing C-DRX operation;
Figure 4c schematically depicts timing of packets for both first and services having different periodicities arriving at a base station and transmission from the base station to a UE under a second C-DRX operation according to the disclosure based on the union of the existing C-DRX operations;
Figure 4d schematically depicts the existing C-DRX operations of Figures 4a and 4b with respect to the C-DRX operation according to the disclosure of Figure 4c.

Where a drawing indicates a feature also shown in another drawing, identical reference numerals have been used.

### Detailed Description of Preferred Embodiments

The present disclosure recognises traffic for multiple services having different periodicities can be sent from the network to a UE using a single C-DRX configuration. Unlike existing C-DRX configurations, in which every cycle has the same timing parameters (for instance, cycle length, on duration and/or timing offset), a single C-DRX configuration is proposed in which the parameters are configured to vary. As a result, the repeating pattern of the C-DRX configuration does not repeat each cycle, but rather over a number of cycles.

Two approaches based on this general approach are proposed. In a first approach, the on duration may be adjusted so that each communication window of the C-DRX configuration covers not only the traffic for the higher periodicity service, but also the immediately subsequent traffic for the lower periodicity service (or services). In a second approach, a single C-DRX configuration can be established based on the union of two (or more) standard C-DRX configurations. Each of the standard C-DRX configurations has a single cycle time, on duration and offset and at least the cycle time differs between these configurations, such that the union of the multiple standard C-DRX configurations results in a single C-DRX configuration with a cycle duration that effectively varies. The variation in cycle duration has a repeating pattern. Both approaches will be discussed in more detail below.

In general terms, there may be considered a method for C-DRX operation in respect of a UE in a cellular network for handling first traffic (of a first service) having a first periodicity and second traffic (of a second service) having a second, longer periodicity. The method comprises operating a single C-DRX configuration between the network and UE, the single C-DRX configuration having timing parameters defining a repeating sequence of communication windows (each communication window may correspond with a time period in which the UE is configured to listen for transmissions from the radio access node or base station of the network; the network is similarly configured to transmit to the UE only during these time periods). At least one of the timing parameters varies (or is modulated) between successive communication windows of the repeating sequence. The timing parameters and/or the variation are based on or in accordance with the first and second periodicities. For example, one timing parameter may be in accordance with the first periodicity and/or the variation of another timing parameter may be in accordance with the second periodicity.

For example, the timing parameters may comprise one or both of: a cycle length time duration; and an on duration. Another possible timing parameter is an offset time (at which the communication window begins after the start of the cycle), although it is generally assumed that this is zero. In that case, the cycle length is the time between the start of one communication window and the start of the (immediately) subsequent communication window. Optionally, the cycle length time has a non-integer value.

Advantageously, the first traffic and second traffic are both for services having an associated Quality of Service (QoS) parameter indicative of delay sensitivity and/or real time traffic.

The approach of the method may be implemented in the form of software, middleware or firmware (a computer program), comprising instructions that when executed by a processor cause the processor to control operation of a device in a cellular network to operate according to the method as herein disclosed. Additionally or alternatively, the approach of the method may be implemented in hardware and/or as a device, for example a network entity of a cellular network and/or a UE of a cellular network.

Reference to the general terms of the disclosure will be made again below. In the meantime, further details of specific embodiments are now discussed.

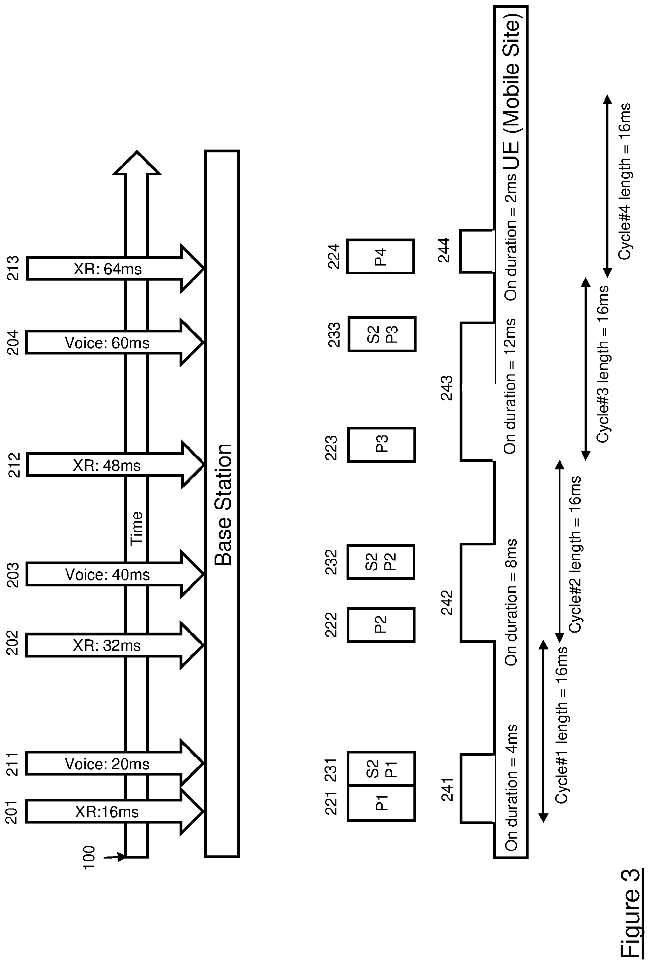

The first approach is discussed with reference to Figure 3, in which there is schematically depicted timing of packets for two services having different periodicity arriving at a base station and transmission from the base station to a UE under a C-DRX operation. In this example, two services are considered: a first, XR (for example, video) service with a periodicity of 16ms; and a second, voice service with a periodicity of 20ms. Both services are delay sensitive (that is, have an associated delay sensitivity QoS characteristic). It will be seen that a zero time (t=0) 200 is indicated and a first packet for the first service 201 (P1) arrives 16ms later (t=16ms), a second packet for the first service 202 (P2) arrives 16ms later (t=32ms), a third packet for the first service 203 (P3) arrives 16ms later (t=48ms) and a fourth packet for the first service 204 (P4) arrives 16ms later (t=64ms). Similarly, a first packet for the second service 211 (S2 P1) arrives 20ms after the zero time (t=20ms), a second packet for the second service 212 (S2 P2) arrives 20ms later (t=40ms) and a third packet for the second service 213 (S2 P3) arrives 20ms later (t=60ms).

A single C-DRX configuration is proposed between the base station (radio access node) and the UE. The cycle time for the single C-DRX configuration is set according to the lowest periodicity of the multiple service, that is at 16ms. As discussed above, the on-duration time for each cycle of the C-DRX configuration is extended for the time period needed to receive data belonging to both services within that cycle. In other words, allocation of the "on duration time" depends on the cycle, considering the periodicity of the services.

During a first cycle, the on duration is set to 4ms. As a result, a first communication window 241 (from t=16ms until t=20ms) is able to transmit the first packet for the first service (P1) in a first transmission 221 and the first packet for the second service (S2 P1) in a second transmission 231.

For a second cycle (which begins at t=32ms), the on duration is now set to 8ms. Consequently, a second communication window 242 (from t=32ms until t=40ms) allows transmission of the second packet for the first service (P2) in a third transmission 222 at the start of the window and the second packet for the second service (S2 P2) in a fourth transmission 232 at the end of the window.

A third cycle begins at t=48ms and the on duration for this is set to 12ms. This provides a third communication window 243 (from t=48ms until t=60ms), thereby permitting transmission of the third packet for the first service (P3) in a fifth transmission 223 at the start of the window and the third packet for the second service (S2 P3) in a sixth transmission 233 at the end of the window.

In the fourth cycle (starting at t=64ms and ending at t=80ms), no packets for the second service will arrive. Thus, there is only a short fourth communication window 244 with an on duration of 2ms, permitting transmission of the fourth packet for the first service (P4) in a seventh transmission 224.

There is also a fifth cycle (not shown), from t=80ms until t=96ms, in which a packet for each of the first and second services arrives at the same time (at t=80). Thus, the fifth cycle is similar to the fourth cycle in that only a short fifth communication window (not shown) with an on duration of 2ms is required, permitting transmission of the packets for both the first and second services.

It will be understood that the sixth, seventh, eighth, ninth and tenth cycles (not shown) are exact repetitions of the first, second, third, fourth and fifth cycles respectively. Indeed, this cycle of cycles will continue to repeat, so further discussion is not required. As can be seen, this approach makes it possible to deliver both services (XR and Voice) without any buffering. Effectively, the UE is awake for 28 ms out of every 96ms (or equivalently, the UE is in sleep mode for 68ms out of every 96ms). However, the UE is forced to be listening (awake or not in sleep mode) during times when no transmissions are expected.

Although this is illustrated for traffic with certain periodicities, it will be understood that a similar approach may be taken for traffic with different periodicities. It is also not necessary for the periodicities to be integer values, although the repeating pattern of cycles may be longer where one or more periodicities are non-integer

There are two main disadvantages with this approach. First, the requirement for the UE to be listening when no transmissions are expected means that the UE spends a sub-optimal amount of time in sleep mode, therefore consuming more battery power than necessary. Second, the flexible on duration (onDurationTimer) setting is not possible within existing C-DRX configuration settings and implementations according to the current standard. It may require considerable re-design of the calculation of how long the "on-duration time" should last. Currently, this timer it is specified as only one value (see 3GPP TS 28.321, rel. 17.3.0, section 5.7).

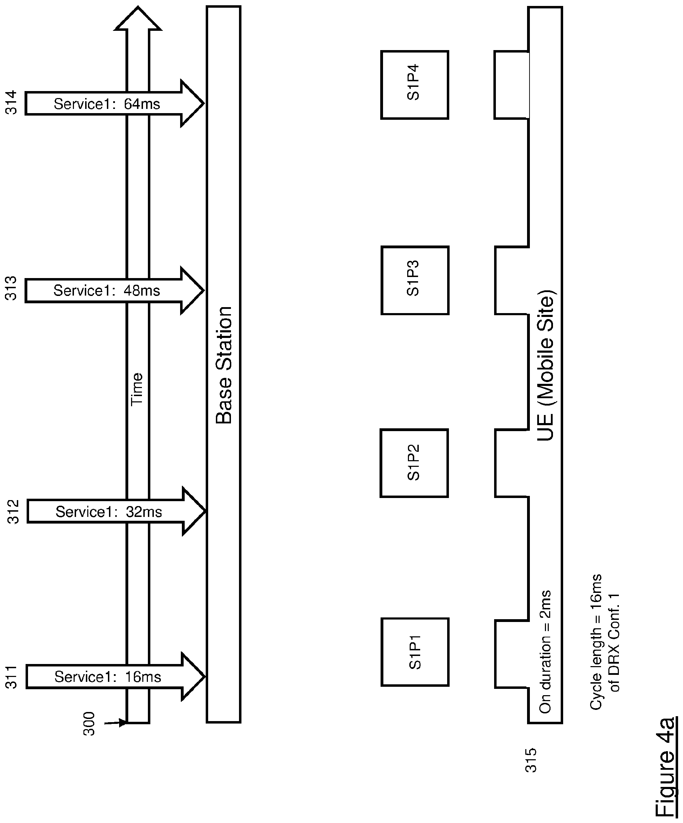

The second approach is considered with reference to Figures 4a-d. Referring first to Figure 4a, in which there is schematically depicted timing of packets for a first of two services having a first periodicity arriving at a base station and transmission from the base station to a UE under an existing C-DRX operation. As with the example shown in Figure 3, the first service has a periodicity of 16ms and the second service has a periodicity of 20ms. Both services are delay sensitive (that is, have an associated delay sensitivity QoS characteristic).

The arriving packets for the first service are shown in the top part of the drawing. A zero time (t=0) 300 is indicated, with a first packet (S1P1) 311 arriving 16ms later (t=16ms), a second packet (S1P2) 312 arriving 16ms later (t=32ms), a third packet (S1P3) 313 arriving a further 16ms later (t=48ms) and a fourth packet 314 (S1P4) arriving another 16ms later (t=64ms). Beneath the arriving packets is shown a standard DRX configuration for the first service 315, having a cycle time of 16ms and an on duration of 2ms. The offset is effectively zero. This would effectively be the DRX configuration if only this service is used at a given time.

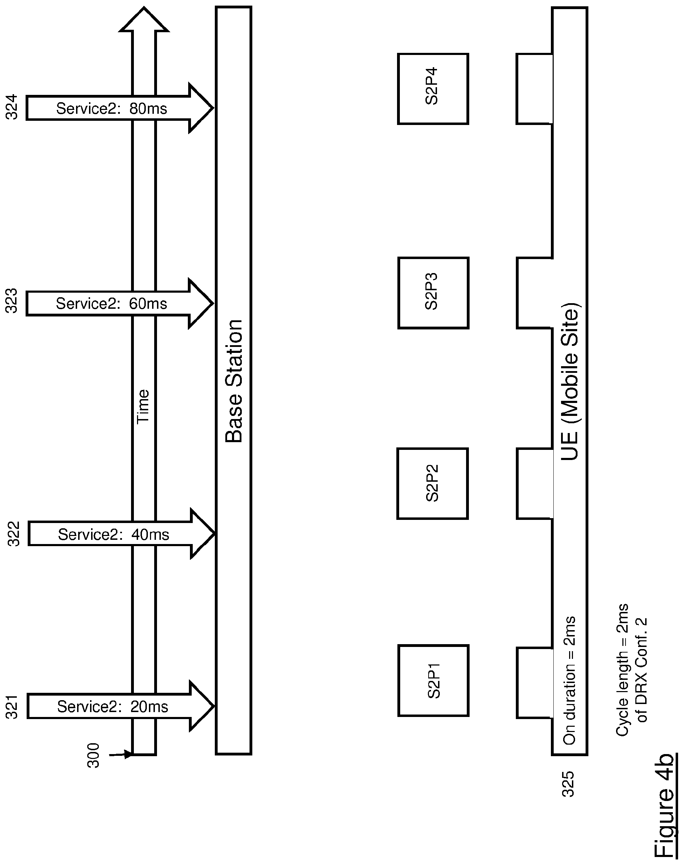

Next, reference is made to Figure 4b, in which there is schematically depicted timing of packets for a second of two services having a second, different periodicity arriving at a base station and transmission from the base station to a UE under an existing C-DRX operation. The arriving packets for the second service are shown in the top part of the drawing, with the zero time (t=0) 300 again indicated. A first packet (S2P1) 321 arrives 20ms later (t=20ms), a second packet (S2P2) 322 arrives 20ms later (t=40ms), a third packet (S2P3) 323 arrives another 20ms later (t=60ms) and a fourth packet (S2P4) 324 arrives a further 20ms later (t=80ms). Similarly, a standard DRX configuration for the second service 325 is shown beneath the arriving packets, having a cycle time of 20ms and an on duration of 2ms. The offset is effectively zero. Again, this would effectively be the DRX configuration if only the second service is used at a certain time.

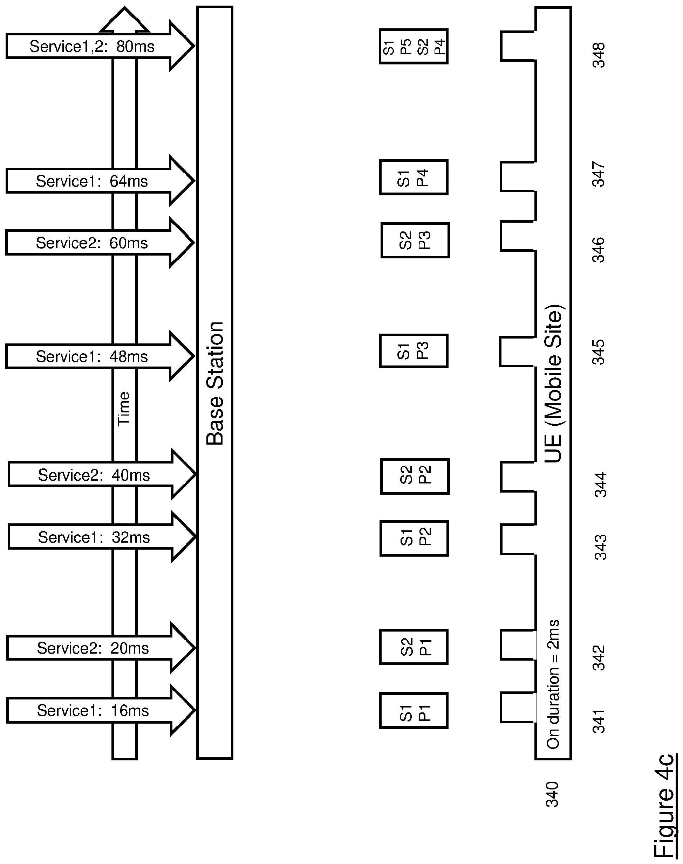

The proposal of this approach is to generate a single C-DRX configuration based on the union of the two standard DRX configurations for the two services. Referring to Figure 4c, there is schematically depicted timing of packets for both first and second services having different periodicities arriving at a base station (in the top part of the drawing) There is also shown transmission from the base station to a UE under a second C-DRX operation 340 according to the disclosure based on the union of the existing C-DRX operations. This operation 340 is shown in the bottom part of the drawing, comprising: a first communication window 341 at t=16ms; a second communication window 342 at t=20ms; a third communication window 343 at t=32ms; a fourth communication window 344 at t=40ms; a fifth communication window 345 at t=48ms; a sixth communication window 346 at t=60ms; a seventh communication window 347 at t=64ms; and an eighth communication window 348 at t=80ms. The first, third, fifth, seventh and eighth communication windows are used for the first service and the second, fourth, sixth and eighth communication windows are used for the second service (such that the eighth communication window is used for both services). The on duration for all the communication windows is 2ms.

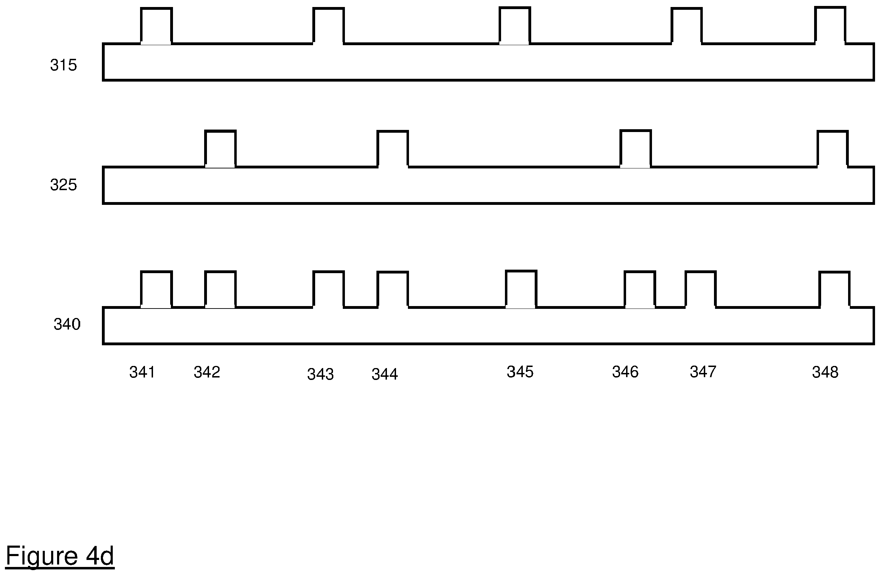

Figure 4d schematically depicts the existing C-DRX operations of Figures 4a and 4b with respect to the C-DRX operation according to the disclosure of Figure 4c. It can be seen more clearly that the second C-DRX operation 340 is composed from the union or superposition of the standard DRX configuration for the first service 315 and the standard DRX configuration for the second service 325.

This approach has significant benefits compared with data bundling (using a single C-DRX configuration with a single, fixed cycle time used for every cycle and buffering data until the next communication window). As explained previously, data bundling causes buffering of data and may not be acceptable for traffic from more than one delay sensitive service. For instance, an XR application and another real time service (for instance, voice) running at the same time would have degraded QoS and user experience with existing approaches. The approach proposed above, in which a single C-DRX configuration is based on the union of the two standard DRX configurations need not require data buffering and is also advantageous over the use of multiple simultaneously active DRX configurations, which are complex for the network and UE to implement, due to processing requirements and traffic organisation. Similar considerations may apply at the base station, although processing power and/or power efficiency at the base station may be greater.

In contrast, the approach of Figure 4 does not require a significant impact on the current C-DRX operation. No changes to the duration of the "on-duration timer" (see 38.321 section 5.7) are required and the approach can also be introduced independent of whether integer or non-integer values are used for the cycle length. Moreover, the UE is only awake for 16ms out of every 96ms (or equivalently, the UE is in sleep mode for 80ms out of every 64ms). Please note that the UE in C-DRX mode will wake up independently of whether a packet is really sent from a base station or not. The UE wakes up according to the provided C-DRX configuration.

Referring again to the general sense of the disclosure, as discussed above, further optional, preferable and/or advantageous details may be considered.

In some embodiments, the cycle length time is varied such that the repeating sequence of communication windows comprises a union (superposition) of a first periodic sequence of communication windows according to the first periodicity and a second periodic sequence of communication windows according to the second periodicity. Preferably, the first periodic sequence of communication windows has a first, fixed on duration and the second periodic sequence of communication windows has a second, fixed on duration. The first and second on durations are beneficially the same.

In other embodiments, the cycle length time is fixed. Then, the on duration is advantageously varied between successive communication windows. Preferably, the cycle length time is based on the first periodicity.

Further specific details will now be discussed, before returning to the general sense of the disclosure again.

In all implementations according to the disclosure, communication or signalling of parameters for the single C-DRX configuration should be considered. Radio Resource Control (RRC) configuration messages are typically used for signalling C-DRX settings, but Medium Access Control (MAC) signalling might be used. For the first approach, in which the on duration is adjusted between cycles, it has been noted above that the current C-DRX configuration signalling may not be suitable. However, one approach to address this may be to specify multiple on duration values to be used in successive cycles. This will require modifications to the 3GPP standards, however.

For the second approach, in which the single C-DRX configuration is formed by the union of multiple standard C-DRX configurations, existing signalling to inform the UE about each of the standard C-DRX configurations may be used. The UE may then be instructed to generate timings for the single C-DRX configuration itself from the signalled information. Alternatively, a new form of signalling may be used to inform the UE about the timing parameters for the single C-DRX configuration to be used. This may indicate a series of cycle length times to be applied in a sequence (similar to the proposal for signalling in respect of the first approach discussed above, but in respect of cycle length rather than on duration).

Once again referencing the general sense discussed earlier, further optional features may be considered. For example, the method (or approach) may comprise communicating instructions for the single C-DRX configuration from the network to the UE. In some implementations, rather than operating a single C-DRX configuration, an independent aspect of the disclosure may reside in communicating instructions for a single C-DRX configuration. In respect of this aspect, any of the details (optional or otherwise) in respect of the operating aspect of the disclosure may also be applied to the communicating aspect. The combination of the two aspects is additionally possible.

The instructions may comprise indications of the first and second periodicities (for example, in the form of first and second cycle length times). Then, the UE may determine timings of the repeating sequence of communication windows based on the indications. For example, the UE may calculate the union of two DRX configurations based on the communicated periodicities.

In some embodiments, the instructions comprise the timing parameters that entirely define timings of the repeating sequence of communication windows. This may require specific signalling of the timing parameters of the single C-DRX configuration (for example, in the form of multiple cycle length times and/or on durations).

Any of the methods described herein may be implemented as a computer program. The computer program may be configured to control a MS, UE and/or a network node or entity to perform any method according to the disclosure. A network node of a cellular network may also be provided, configured to operate in accordance with certain methods disclosed herein. For example, the network node may include a processor and at least one communication interface, particularly comprising one or both of a transmitter and receiver. A UE may also be provided, configured to operate in accordance with certain methods disclosed herein. The UE may likewise include a processor and at least one communication interface, particularly comprising one or both of a transmitter and receiver.

Although specific embodiments have now been described, the skilled person will understand that various modifications and variations are possible. For example, whilst the disclosure is described in relation to existing network architecture, it will be understood that changes to the architecture (and/or nomenclature) are possible, but the present disclosure may still be applicable in this case. Whilst two approaches to varying the timing parameters (on duration and/or cycle length) have been considered, the skilled person may consider others (for example, varying the offset rather than the cycle length may be possible for some periodicity combinations). It may also be possible to implement approaches according to the disclosure with more than two services (and/or types of traffic). Also, combinations of any specific features shown with reference to one embodiment (or aspect) or with reference to multiple embodiments (or aspects) are also provided, even if that combination has not been explicitly detailed herein.

## Claims

1. A method for Connected Mode Discontinuous Reception (C-DRX) operation in respect of a User Equipment (UE) in a cellular network for handling first traffic having a first periodicity and second traffic having a second, longer periodicity, the method comprising:
operating a single C-DRX configuration between the network and UE, the single C-DRX configuration having timing parameters defining a repeating sequence of communication windows, at least one of the timing parameters varying between successive communication windows of the repeating sequence based on both the first and second periodicities.

2. The method of claim 1, wherein the timing parameters comprise one or both of: a cycle length time duration; and an on duration.

3. The method of claim 2, wherein the cycle length time is varied such that the repeating sequence of communication windows comprises a union of a first periodic sequence of communication windows according to the first periodicity and a second periodic sequence of communication windows according to the second periodicity.

4. The method of claim 3, wherein the first periodic sequence of communication windows has a first, fixed on duration and the second periodic sequence of communication windows has a second, fixed on duration.

5. The method of claim 2 or claim 3, wherein the on duration is varied between successive communication windows.

6. The method of claim 5, wherein the cycle length time is fixed and/or wherein the cycle length time is based on the first periodicity.

7. The method of any one of claims 2 to 6, wherein the cycle length time has a non-integer value.

8. The method of any preceding claim, further comprising:
communicating instructions for the single C-DRX configuration from the network to the UE.

9. The method of claim 8, wherein the instructions comprise indications of the first and second periodicities, the UE determining timings of the repeating sequence of communication windows based on the indications.

10. The method of claim 8, wherein the instructions comprise the timing parameters that entirely define timings of the repeating sequence of communication windows.

11. The method of any one of claims 8 to 10, wherein the instructions are communicated in a Radio Resource Control (RRC) configuration message or in Medium Access Control (MAC) signalling.

12. The method of any preceding claim, wherein the first traffic and second traffic are both for services having an associated Quality of Service (QoS) parameter indicative of delay sensitivity and/or real time traffic.

13. A computer program, comprising instructions that when executed by a processor cause the processor to control operation of a device in a cellular network to operate according to the method of any preceding claim.

14. A network entity of a cellular network, configured to operate in accordance with the method of any of claims 1 to 12.

15. A User Equipment (UE) of a cellular network, configured to operate in accordance with the method of any of claims 1 to 12.
